# EUROPEAN PATENT APPLICATION

(11) **EP 4 792 778 A1**
(43) Date of publication of application: **19.08.2026**
(21) Application number: 24870494.2
(22) Date of filing: 14.09.2024
(51) Int. Cl.: A61C 9/00

(54) **TOOTH SCANNING METHOD AND APPARATUS, DEVICE AND MEDIUM**

(30) Priority: 27.09.2023 CN 202311264582
(71) Applicant: Shining 3D Tech Co., Ltd., Hangzhou, Zhejiang 311258 (CN)
(72) Inventor: MA, Chao, Hangzhou, Zhejiang 311258 (CN); ZHAO, Xiaobo, Hangzhou, Zhejiang 311258 (CN); CHEN, Xiaojun, Hangzhou, Zhejiang 311258 (CN); JIA, Yongjie, Hangzhou, Zhejiang 311258 (CN); XIAO, Shujuan, Hangzhou, Zhejiang 311258 (CN); ZHU, Yuru, Hangzhou, Zhejiang 311258 (CN); XU, Sixu, Hangzhou, Zhejiang 311258 (CN)
(74) Representative: Metida
(86) International application number: PCT/CN2024/119073
(87) International publication number: WO 2025/066950

(57) **Abstract**

A tooth scanning method and apparatus, a device, and a medium. The method comprises: in response to a three-dimensional scanning operation for a subgingival margin line, acquiring a target image comprising three-dimensional morphology and texture information of a subgingival margin line (S102); performing feature extraction on the target image, to obtain distributed three-dimensional points of a margin line (S104); connecting each of the distributed three-dimensional points of the margin line into a margin line (S106); generating and displaying prompt information matching the morphology of the margin line, the prompt information being used to prompt continuation or stopping of the operation of performing the three-dimensional scanning on the subgingival margin line (S108). The tooth scanning method can improve the accuracy of subgingival margin extraction.

## Description

The present application claims the priority to Chinese patent application with application No. 202311264582.X, filed on September 27, 2023, in China National Intellectual Property Administration, entitled "TOOTH SCANNING METHOD AND APPARATUS, DEVICE AND MEDIUM" the content of which is hereby incorporated herein fully by reference into the present application for all purposes.

### Technical Field

The present application relates to a field of intelligent dental technology, and specifically to a tooth scanning method, an apparatus, a device, and a medium.

### BACKGROUND

A margin line (commonly referred to as a shoulder) is an uniformly prepared, circumferential platform near a gingiva where a restoration and a natural tooth join, following tooth preparation. The fabrication of the margin line imposes high requirements on all aspects of operations performed by both a doctor and a processing laboratory. If issues arise during the fabrication of the margin line, the junction between the restoration and the tooth may develop an overhang, become non-hermetic, or exhibit surface roughness. This may easily lead to mechanical and bacterial irritation of the gingiva, adversely affecting the restoration outcome. Therefore, accurately obtaining the margin line under the gingiva is crucial for dental restoration treatment and margin line fit during crown seating.

### SUMMARY

To solve the above technical problems, the present disclosure provides a tooth scanning method, an apparatus, a device, and a medium.

The present application provides a tooth scanning method, including:
in response to an operation for performing three-dimensional scanning on a subgingival margin line, acquiring a target image comprising three-dimensional morphology and texture information of a subgingival margin line;
obtaining a plurality of three-dimensional points distributed on the subgingival margin line by performing feature extraction on the target image;
obtaining a margin line by connecting each point of the plurality of three-dimensional points; and
generating and displaying prompt information matching a morphology of the margin line, wherein the prompt information comprises a prompt to continue or stop performing the operation of the three-dimensional scanning on the subgingival margin line.

In one embodiment, the obtaining the plurality of three-dimensional points distributed on the subgingival margin line by performing feature extraction on the target image includes:
obtaining a plurality of original three-dimensional points constituting the subgingival margin line by performing the feature extraction on the three-dimensional morphology and the texture information of the subgingival margin line of the target image;
acquiring a discrete curvature and a normal vector direction of each original three-dimensional point;
dividing each of the plurality of original three-dimensional points into different distribution regions according to a corresponding discrete curvature and a corresponding normal vector direction;
searching for the plurality of three-dimensional points distributed on the subgingival margin line obtained from the plurality of original three-dimensional points in each distribution region of the different distribution regions according to an adaptive search strategy.

In one embodiment, the method further including:
labeling the three-dimensional points distributed along the margin line in the different distribution regions with different display identifiers.

In one embodiment, the obtaining the margin line by connecting each point of the plurality of three-dimensional points includes:
extracting a local feature line in real time from each three-dimensional point of the plurality of three-dimensional points during the operation of the three-dimensional scanning on the subgingival margin line, and rendering and displaying the local feature line as the margin line.

In one embodiment, the generating and displaying prompt information matching the morphology of the margin line includes:
identifying whether a current morphology of the margin line is a closed loop curve;
if not, generating and displaying the prompt information comprises the prompt to continue the operation of the three-dimensional scanning on the subgingival margin line;
if yes, generating and displaying the prompt information to stop the three-dimensional scanning.

In one embodiment, the generating and displaying prompt information matching the morphology of the margin line includes:
generating and displaying the prompt information matching the morphology of the margin line according to a preset alert method, wherein the alert method comprises voice broadcast, text display, and/or indicator light.

The present application further provides a tooth scanning apparatus, including:
an image acquisition module, configured to acquire a target image comprising three-dimensional morphology and texture information of a subgingival margin line in response to an operation for performing three-dimensional scanning on a subgingival margin line;
a feature extracting module, configured to obtain a plurality of three-dimensional points distributed on the subgingival margin line by performing feature extraction on the target image;
a connection module, configured to obtain a margin line by connecting each point of the plurality of three-dimensional points;
a prompting module, configured to generate and display prompt information matching a morphology of the margin line, wherein the prompt information comprises a prompt to continue or stop performing the operation of the three-dimensional scanning on the subgingival margin line.

In one embodiment, the feature extracting module is further configured to:
obtain a plurality of original three-dimensional points constituting the subgingival margin line by performing the feature extraction on the three-dimensional morphology and the texture information of the subgingival margin line of the target image;
acquire a discrete curvature and normal vector direction of each original three-dimensional point;
divide each of the plurality of original three-dimensional points into different distribution regions according to a corresponding discrete curvature and a corresponding normal vector direction;
search for the plurality of three-dimensional points distributed on the subgingival margin line obtained from the plurality of original three-dimensional points in each distribution region of the different distribution regions according to an adaptive search strategy.

The present application further provides an electronic device, the electronic device, including:
a processor; a memory configured to store executable instructions for the processor;
wherein the processor is configured to read the executable instructions from the memory and execute the executable instructions to implement the tooth scanning method.

The present application further provides an electronic device, computer-readable storage medium, storing a computer program, wherein the computer program, when executed by a processor, implements the tooth scanning method.

Compared with the prior art, the technical solutions provided by the embodiments of the present disclosure have the following advantages:
The tooth scanning method, apparatus, device, and medium provided by the embodiments of the present disclosure include: in response to an operation for performing three-dimensional scanning on a subgingival margin line, acquiring a target image including three-dimensional morphology and texture information of the subgingival margin line; performing feature extraction on the target image to obtain margin line distribution three-dimensional points; connecting each of the margin line distribution three-dimensional points to form a margin line; generating and displaying prompt information matching the morphology of the margin line, the prompt information being used to prompt to continue or stop performing the operation for three-dimensional scanning on the subgingival margin line. This technical solution can retract the gingiva at the scanning location and expose the three-dimensional morphology and texture information of the subgingival margin line through three-dimensional scanning, enabling the target image to more clearly and completely display the surface three-dimensional morphology data of the teeth and gingiva; thereby, more accurate margin line distribution three-dimensional points can be obtained based on the target image, and they are connected into a margin line, improving the accuracy of subgingival margin line extraction. Combining prompt information during the three-dimensional scanning process can reduce the user's workload in monitoring scanning progress and improve the intuitiveness of scanning progress.

### BRIEF DESCRIPTION OF THE DRAWINGS

The accompanying drawings, which are incorporated into and constitute a part of this specification, illustrate embodiments consistent with the present application and, together with the description, serve to explain the principles of the present application.

To describe the technical solutions in the embodiments of the present disclosure or in the prior art more clearly, the following briefly introduces the accompanying drawings required for describing the embodiments or the prior art. Obviously, the accompanying drawings in the following description show merely some embodiments of the present disclosure, and a person of ordinary skill in the art may still derive other drawings from these accompanying drawings without creative efforts.
FIG. 1 is a flowchart illustrating a tooth scanning method according to an embodiment of the present disclosure.
FIG. 2 is a schematic diagram of an interface during three-dimensional scanning according to an embodiment of the present disclosure.
FIG. 3 is a schematic diagram of a margin line according to an embodiment of the present disclosure.
FIG. 4 is a schematic diagram of a preparation margin line according to an embodiment of the present disclosure.
FIG. 5 is a structural block diagram of a tooth scanning apparatus according to an embodiment of the present disclosure.
FIG. 6 is a structural schematic diagram of an electronic device according to an embodiment of the present disclosure.

### DETAILED DESCRIPTION

To make the objectives, technical solutions, and advantages of the present disclosure clearer, the solutions of the present disclosure will be further described below. It should be noted that the embodiments of the present disclosure and the features in the embodiments may be combined with each other without conflict.

Many specific details are set forth in the description below to facilitate a full understanding of the present disclosure. However, the present disclosure may also be implemented in other ways different from those described herein. Obviously, the embodiments in the specification are only a part of the embodiments of the present disclosure, not all of them.

Considering that accurately obtaining the margin line of the subgingival margin line is crucial for dental restoration treatment and margin line fit during crown seating, embodiments of the present disclosure provide a tooth scanning method, apparatus, device, and medium. For ease of understanding, the following describes the embodiments of the present disclosure.

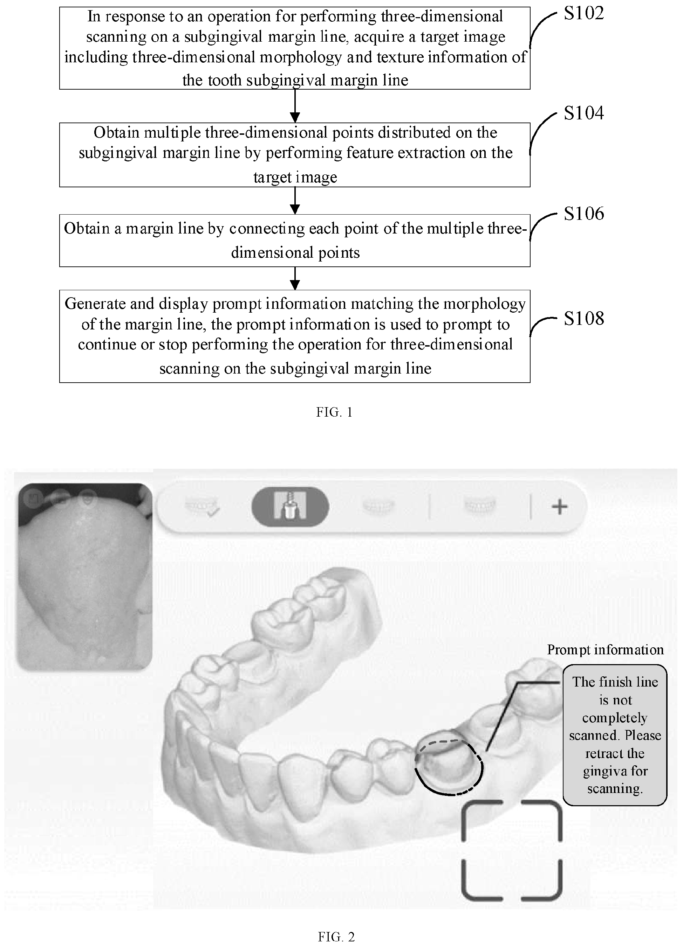

FIG. 1 is a flowchart of a tooth scanning method provided by an embodiment of the present disclosure. The method may be executed by a tooth scanning apparatus configured on a terminal. The apparatus may be implemented by software and/or hardware. As shown in FIG. 1, the tooth scanning method may include the following steps.

S102: In response to an operation for performing three-dimensional scanning on a subgingival margin line, a target image including three-dimensional morphology of a tooth and texture information of a subgingival margin line is acquired.

In this embodiment, according to the operation for performing three-dimensional scanning on the subgingival margin line, gingival retraction methods such as using a retraction cord or activating an air-blowing function of an intraoral three-dimensional scanner may be employed to temporarily retract free gingiva, dynamically retract the gingiva to fully expose the subgingival margin line. During the gingival air-blowing process, the gingiva moves in real-time, exposing several layers of morphology information of the subgingival margin line, such as three-dimensional morphology and texture information. In this case, the intraoral three-dimensional scanner is used to perform real-time three-dimensional scanning on the gingival area to obtain the target image including the three-dimensional morphology and the texture information of the subgingival margin line. The target image acquired through gingival air-blowing and scanning may more clearly and completely display the surface three-dimensional morphology data of the teeth and gingiva, which is conducive to improving the accuracy of margin line extraction during later crown design.

S104: multiple three-dimensional points distributed on the subgingival margin line are obtained by performing feature extraction on the target image.

This embodiment may include the following content:
Multiple original three-dimensional points constituting the subgingival margin line are obtained by performing the feature extraction on the three-dimensional morphology and the texture information of the subgingival margin line of the target image. In specific implementation, the target image may be input into a pre-trained feature extraction model, and geometric features of the tooth such as the three-dimensional morphology and texture information of the subgingival margin line of the target image are extracted through the feature extraction model to obtain multiple original three-dimensional points constituting the subgingival margin line. The original three-dimensional points are equivalent to discrete points.

Acquire a discrete curvature and a normal vector direction of each original three-dimensional point; and divide each of the multiple original three-dimensional points into different distribution regions according to a corresponding discrete curvature and a corresponding normal vector direction.

Specifically, each original three-dimensional point may be sequentially arranged according to coordinate parameters of each original three-dimensional point and obtain a continuous discrete point sequence. The discrete point sequence may form a curve. Therefore, the discrete curvature and normal vector direction of each original three-dimensional point are calculated according to the discrete point sequence.

The three-dimensional points distributed along the subgingival margin line may generally be identified based on the discrete curvature and the normal vector direction. The discrete curvature and normal vector direction are used to describe local geometric features of the curve formed by the discrete point sequence. Furthermore, the embodiment may divide the original three-dimensional points into different distribution regions according to the discrete curvature and normal vector direction. Within a distribution region, there are optimal three-dimensional points distributed along the margin line that may be connected to form the margin line. In one example, the multiple original three-dimensional points may be divided different distribution regions according to a difference in discrete curvature and a difference in normal vector direction between the original three-dimensional points; among the multiple original three-dimensional points in the same distribution region, the difference in discrete curvature is within a preset curvature difference range, and the difference in normal vector direction is within a preset direction difference range.

Next, the optimal three-dimensional points distributed along the margin line are searched from the original three-dimensional points in each distribution region by using an adaptive search strategy. By using the adaptive search strategy, the embodiment may search for optimal three-dimensional points from each distribution region, improving the accuracy of the three-dimensional points distributed along the margin line.

To facilitate the user to view the three-dimensional points distributed along the margin line in real-time during the scanning process, this embodiment may label the three-dimensional points distributed along the margin line in different distribution regions with different display identifiers. For example, using color as the display identifier, different colors are divided to each three-dimensional point distributed along the margin line on the software interface, and the different three-dimensional points are marked with different colors. By marking the three-dimensional points with display identifiers, this embodiment makes the three-dimensional points more intuitive, visible, and easy to distinguish.

S106: a margin line is obtained by connecting each point of the multiple three-dimensional points.

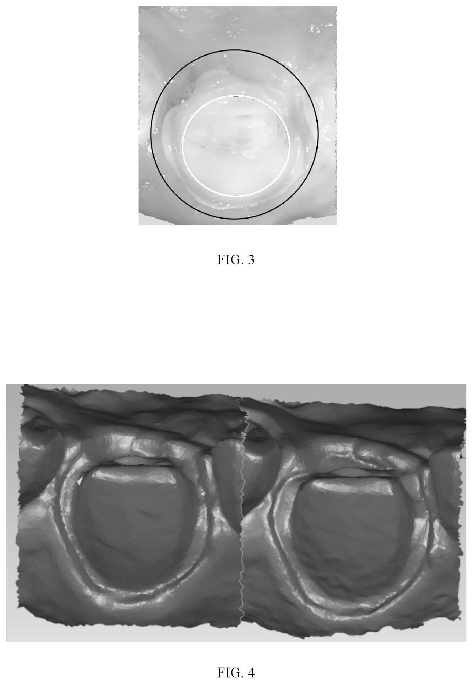

As the three-dimensional scanning proceeds, real-time extraction of local feature line is performed on each three-dimensional points distributed on the subgingival margin line, and the extracted feature lines are rendered and displayed as the margin line. As shown in the interface schematic diagram in FIG. 2, while performing three-dimensional scanning, the rendered margin line is gradually displayed on the software interface simultaneously until the scanning is complete and the margin line is fully displayed. FIG. 3 exemplarily shows a completely displayed margin line from a top view perspective, where the margin line is schematically represented by a curve shown as a black line.

S108: prompt information matching a morphology of the margin line is generated and displayed. The prompt information includes a prompt to continue or stop performing the operation of the three-dimensional scanning on the subgingival margin line.

In one implementation, it may be identified whether the current morphology of the margin line is a closed loop curve; if not, it indicates that a complete margin line has not yet been formed, and scanning needs to continue to obtain new margin line distribution three-dimensional points. In this case, prompt information to continue the three-dimensional scanning is generated and displayed. If yes, it indicates that the margin line has been completely scanned and identified. In this case, prompt information to stop the three-dimensional scanning is generated and displayed.

In this embodiment, prompt information matching the morphology of the margin line may be generated and displayed according to a preset alert method. The alert method includes voice broadcast, text display, and/or indicator light.

In the example of FIG. 2, the prompt information is displayed using the alert method of text display. Also, in some other examples, when the current morphology of the margin line is not a closed loop curve, the user is reminded by voice broadcast that margin line distribution three-dimensional points are continuously increasing and to please continue the three-dimensional scanning; simultaneously, a yellow indicator light may be lit to indicate that the three-dimensional scanning is not yet complete and needs to continue. When the current morphology of the margin line is a closed loop curve, the user is reminded by voice broadcast that the margin line has been completely scanned and identified, and the operation for three-dimensional scanning can be stopped to complete the scanning; and, the indicator light is switched from yellow to green to prompt the user that the three-dimensional scanning is complete.

By generating and displaying prompt information matching the morphology of the margin line, this embodiment may remind the user in real-time to continue or stop scanning, eliminating the need for the user to monitor scanning progress and reducing the user's workload.

In summary, the tooth scanning method provided by the embodiments of the present disclosure first, in response to an operation for performing three-dimensional scanning on a subgingival margin line, acquires a target image including three-dimensional morphology and texture information of the subgingival margin line; then performs feature extraction on the target image to obtain margin line distribution three-dimensional points; connects each of the margin line distribution three-dimensional points to form a margin line; and simultaneously, generates and displays prompt information matching the morphology of the margin line, the prompt information being used to prompt to continue or stop performing the operation for three-dimensional scanning on the subgingival margin line.

This technical solution can retract the gingiva at the scanning location and expose the three-dimensional morphology and texture information of the subgingival margin line through three-dimensional scanning, enabling the target image to more clearly and completely display the surface three-dimensional morphology data of the teeth and gingiva; thereby, more accurate margin line distribution three-dimensional points can be obtained based on the target image, and they are connected into a margin line, improving the accuracy of subgingival margin line extraction. Combining prompt information during the three-dimensional scanning process can reduce the user's workload in monitoring scanning progress and improve the intuitiveness of scanning progress.

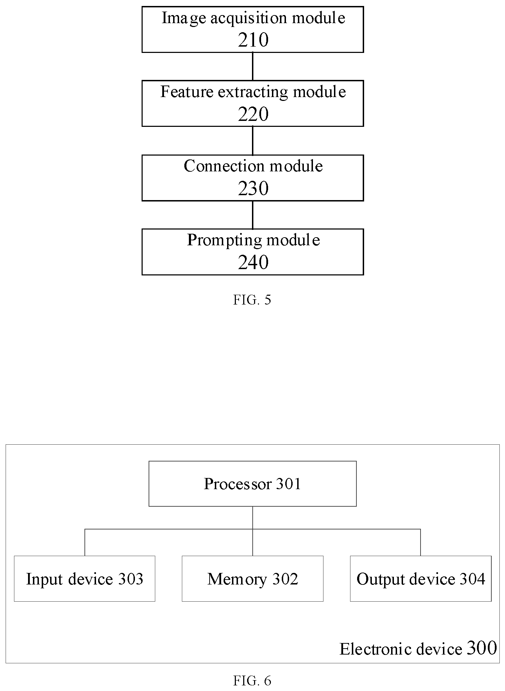

FIG. 5 is a structural block diagram of a tooth scanning apparatus provided by an embodiment of the present disclosure. The apparatus may be used to implement the tooth scanning method provided in the above embodiments. As shown in FIG. 5, the tooth scanning apparatus may include the following modules.
An image acquisition module 210, configured to, in response to an operation for performing three-dimensional scanning on a subgingival margin line, acquire a target image including three-dimensional morphology and texture information of the subgingival margin line;
A feature extraction module 220, configured to perform feature extraction on the target image to obtain margin line distribution three-dimensional points;
A connection module 230, configured to connect each of the margin line distribution three-dimensional points to form a margin line;
A prompt module 240, configured to generate and display prompt information matching the morphology of the margin line, the prompt information being used to prompt to continue or stop performing the operation for three-dimensional scanning on the subgingival margin line.

In one embodiment, the feature extraction module 220 is further configured to:
Perform feature extraction on the three-dimensional morphology and texture information of the subgingival margin line in the target image to obtain multiple original three-dimensional points constituting the subgingival margin line;
Acquire discrete curvature and normal vector direction of each of the original three-dimensional points;
Divide the multiple original three-dimensional points into different distribution regions according to the discrete curvature and the normal vector direction;
Search for margin line distribution three-dimensional points from the original three-dimensional points in each of the distribution regions respectively according to an adaptive search strategy.

The implementation principles and technical effects generated by this embodiment of the apparatus are the same as those of the foregoing method embodiment. For brevity, parts not mentioned in the apparatus embodiment may refer to corresponding content in the foregoing method embodiment.

FIG. 6 is a structural schematic diagram of an electronic device provided by an embodiment of the present disclosure. As shown in FIG. 6, the electronic device 300 includes one or more processors 301 and a memory 302.

The processor 301 may be a central processing unit (CPU) or have other forms of processing capability and/or instruction execution capability, and may control other components in the electronic device 300 to perform desired functions.

The memory 302 may include one or more computer program products. The computer program products may include various forms of computer-readable storage media, such as volatile memory and/or non-volatile memory. The volatile memory may include, for example, random access memory (RAM) and/or cache memory. The non-volatile memory may include, for example, read-only memory (ROM), hard disk, flash memory, etc. One or more computer program instructions may be stored on the computer-readable storage medium. The processor 301 may run the program instructions to implement the tooth scanning method of the embodiments of the present disclosure described above and/or other desired functions. Various content such as input signals, signal components, and noise components may also be stored in the computer-readable storage medium.

In an example, the electronic device 300 may further include: an input device 303 and an output device 304. These components are interconnected via a bus system and/or other forms of connection mechanisms (not shown).

Furthermore, the input device 303 may also include, for example, a keyboard, mouse, etc.

The output device 304 may output various information to the outside, including determined distance information, direction information, etc. The output device 304 may include, for example, a display, speaker, printer, and communication network and remote output devices connected thereto, etc.

Of course, for simplicity, FIG. 6 only shows some of the components related to the present disclosure in the electronic device 300, omitting components such as buses, input/output interfaces, etc. In addition, according to specific application situations, the electronic device 300 may also include any other appropriate components.

Furthermore, this embodiment also provides a computer-readable storage medium having stored there on a computer program which, when executed by a processor, implements the above tooth scanning method.

The computer program product of the tooth scanning method, apparatus, electronic device, and medium provided by the embodiments of the present disclosure includes a computer-readable storage medium storing program code. The instructions included in the program code may be used to execute the method described in the foregoing method embodiments. Specific implementations may refer to the method embodiments and are not repeated here.

It should be noted that, in this text, relational terms such as "first" and "second" are used only to distinguish one entity or operation from another entity or operation, and do not necessarily require or imply any actual such relationship or order between these entities or operations. Moreover, the terms "comprise", "include", or any other variations thereof are intended to cover non-exclusive inclusion, so that a process, method, article, or device that includes a series of elements includes not only those elements, but also other elements not explicitly listed, or elements inherent to such process, method, article, or device. Without more restrictions, an element defined by the phrase "comprising a ..." does not exclude the presence of additional identical elements in the process, method, article, or device that includes the element.

The above descriptions are only specific implementations of the present disclosure, enabling those skilled in the art to understand or implement the present disclosure. Various modifications to these embodiments will be apparent to those skilled in the art. The general principles defined herein may be implemented in other embodiments without departing from the spirit or scope of the present disclosure. Therefore, the present disclosure will not be limited to the embodiments described herein but should be accorded the widest scope consistent with the principles and novel features disclosed herein.

### INDUSTRIAL APPLICABILITY:

In the tooth scanning method provided by the present disclosure, three-dimensional scanning can retract the gingiva at the scanning location and expose the three-dimensional morphology and texture information of the subgingival margin line, enabling the target image to more clearly and completely display the surface three-dimensional morphology data of the teeth and gingiva; thereby, more accurate margin line distribution three-dimensional points can be obtained based on the target image, and they are connected into a margin line, improving the accuracy of subgingival margin line extraction. Combining prompt information during the three-dimensional scanning process can reduce the user's workload in monitoring scanning progress and improve the intuitiveness of scanning progress, exhibiting strong industrial applicability.

## Claims

1. A tooth scanning method, comprising:
in response to an operation for performing three-dimensional scanning on a subgingival margin line, acquiring a target image comprising three-dimensional morphology and texture information of a subgingival margin line;
obtaining a plurality of three-dimensional points distributed on the subgingival margin line by performing feature extraction on the target image;
obtaining a margin line by connecting each point of the plurality of three-dimensional points; and
generating and displaying prompt information matching a morphology of the margin line, wherein the prompt information comprises a prompt to continue or stop performing the operation of the three-dimensional scanning on the subgingival margin line.

2. The method according to claim 1, wherein the obtaining the plurality of three-dimensional points distributed on the subgingival margin line by performing feature extraction on the target image comprises:
obtaining a plurality of original three-dimensional points constituting the subgingival margin line by performing the feature extraction on the three-dimensional morphology and the texture information of the subgingival margin line of the target image;
acquiring a discrete curvature and a normal vector direction of each original three-dimensional point;
dividing each of the plurality of original three-dimensional points into different distribution regions according to a corresponding discrete curvature and a corresponding normal vector direction;
searching for the plurality of three-dimensional points distributed on the subgingival margin line obtained from the plurality of original three-dimensional points in each distribution region of the different distribution regions according to an adaptive search strategy.

3. The method according to claim 2, further comprising:
labeling the three-dimensional points distributed along the margin line in the different distribution regions with different display identifiers.

4. The method according to claim 1, wherein obtaining the margin line by connecting each point of the plurality of three-dimensional points comprises:
extracting a local feature line in real time from each three-dimensional point of the plurality of three-dimensional points during the operation of the three-dimensional scanning on the subgingival margin line, and rendering and displaying the local feature line as the margin line.

5. The method according to claim 1, wherein the generating and displaying prompt information matching the morphology of the margin line comprises:
identifying whether a current morphology of the margin line is a closed loop curve;
if not, generating and displaying the prompt information comprises the prompt to continue the operation of the three-dimensional scanning on the subgingival margin line;
if yes, generating and displaying the prompt information to stop the three-dimensional scanning.

6. The method according to claim 1, wherein the generating and displaying prompt information matching the morphology of the margin line comprises:
generating and displaying the prompt information matching the morphology of the margin line according to a preset alert method, wherein the alert method comprises voice broadcast, text display, and/or indicator light.

7. A tooth scanning apparatus, comprising:
an image acquisition module, configured to acquire a target image comprising three-dimensional morphology and texture information of a subgingival margin line in response to an operation for performing three-dimensional scanning on a subgingival margin line;
a feature extracting module, configured to obtain a plurality of three-dimensional points distributed on the subgingival margin line by performing feature extraction on the target image;
a connection module, configured to obtain a margin line by connecting each point of the plurality of three-dimensional points;
a prompting module, configured to generate and display prompt information matching a morphology of the margin line, wherein the prompt information comprises a prompt to continue or stop performing the operation of the three-dimensional scanning on the subgingival margin line.

8. The apparatus according to claim 7, wherein the feature extracting module is further configured to:
obtain a plurality of original three-dimensional points constituting the subgingival margin line by performing the feature extraction on the three-dimensional morphology and the texture information of the subgingival margin line of the target image;
acquire a discrete curvature and normal vector direction of each original three-dimensional point;
divide each of the plurality of original three-dimensional points into different distribution regions according to a corresponding discrete curvature and a corresponding normal vector direction;
search for the plurality of three-dimensional points distributed on the subgingival margin line obtained from the plurality of original three-dimensional points in each distribution region of the different distribution regions according to an adaptive search strategy.

9. An electronic device, comprising:
a processor;
a memory configured to store executable instructions for the processor;
wherein the processor is configured to read the executable instructions from the memory and execute the executable instructions to implement the method according to any one of claims 1-6.

10. A computer-readable storage medium, storing a computer program, wherein the computer program, when executed by a processor, implements the method according to any one of claims 1-6.
